# EUROPEAN PATENT APPLICATION

(11) **EP 2 706 783 A2**
(43) Date of publication of application: **12.03.2014**
(21) Application number: 13183568.8
(22) Date of filing: 09.09.2013
(51) Int. Cl.: H04W 36/14, H04W 36/22

(54) **Apparatuses, systems and methods for offloading data traffic to Wi-Fi network**

(30) Priority: 11.09.2012 US 201261699446 P; 22.11.2012 US 201261729367 P; 18.01.2013 US 201361754193 P; 06.03.2013 US 201361773352 P; 04.09.2013 US 201314017456
(71) Applicant: Acer Incorporated, Taipei County 221 (TW)
(72) Inventor: Ye, Shiang-Rung, 221 New Taipei City (TW)
(74) Representative: Michalski Hüttermann & Partner Patentanwälte

(57) **Abstract**

A mobile communication device is provided with a first wireless module, a second wireless module, and a controller module. The first wireless module is configured to perform wireless transmissions and receptions to and from a telecommunication network using a cellular technology. The second wireless module is configured to perform wireless transmissions and receptions using a WiFi technology. The controller module is configured to perform operations for communication controls, and the operations comprise searching for APs via the second wireless module, reporting a result of the search to the telecommunication network via the first wireless module, and connecting to one of the searched APs via the second wireless module according to a first instruction received from the telecommunication network via the first wireless module for switching data traffic from the telecommunication network to the one of the searched APs.

## Description

### CROSS REFERENCE TO RELATED APPLICATIONS

This Application claims priority of U.S. Application No. 14/017,456, filed on September 04, 2013, which further claims priorities of U.S. Provisional Application No. 61/699,446, filed on September 11, 2012, U.S. Provisional Application No. 61/729,367, filed on November 22, 2012, U.S. Provisional Application No. 61/754,193, filed on January 18, 2013, and U.S. Provisional Application No. 61/773,352, filed on March 06, 2013, and the entirety of which is incorporated by reference herein.

### BACKGROUND OF THE INVENTION

### Field of the Invention

The invention generally relates to provision of communication services across heterogeneous networks, and more particularly, to apparatuses, systems, and methods for offloading data traffic from a telecommunication network to a Wireless Fidelity (WiFi) Access Point (AP).

### Description of the Related Art

With growing demand for ubiquitous computing and networking, various wireless technologies have been developed, such as the Wireless Local Area Network (WLAN) technologies, including the Wireless Fidelity (WiFi) technology, Bluetooth technology, and the Zigbee technology, etc., and also, the cellular technologies, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA-2000) technology, Time Division-Synchronous Code Division Multiple Access (TD-SCDMA) technology, Worldwide Interoperability for Microwave Access (WiMAX) technology, Long Term Evolution (LTE) technology, and Time- Division LTE (TD-LTE) technology, etc. For user convenience and flexibility, most Mobile Stations (MSs) (or may be referred to as User Equipments (UEs)) nowadays are equipped with more than one wireless communication module for supporting different wireless technologies. However, each wireless technology has its own features, such as bandwidth, average coverage, and service rate, etc. Particularly, the bandwidth and coverage provided to an MS by a wireless network may vary according to the location conditions of the MS and/or the time condition.

Taking an MS equipped with a WCDMA module and a WiFi module for example, it may selectively obtain wireless services using the WCDMA technology or the WiFi technology. Generally, the wireless services obtained using the WCDMA technology have a rather limited bandwidth, but better mobility, while the wireless services obtained using the WiFi technology have a sufficient bandwidth, but lacks mobility.

The WiFi module is initially turned off and needs to be turned on manually before obtaining wireless services using the WiFi technology. In addition, a connected AP is determined automatically by the MS with a previous connection history, or determined manually, randomly, by a user of the MS. That is, the telecommunication network to which the MS is connected does not have control over which AP the MS should connect to. Thus, it is very likely that the connected AP may not have the best signal quality or enough bandwidth among all available APs, or even worse, the connected AP may not be suitable enough for providing stable services, which would require further attempts by the MS to select another AP.

### BRIEF SUMMARY OF THE INVENTION

In order to solve the aforementioned problems, the invention proposes apparatuses, systems, and methods for offloading data traffic from a telecommunication network to a WiFi AP, so that the performance of wireless transceiving for mobile communication devices may be improved.

In one aspect of the invention, a mobile communication device is provided. The mobile communication device comprises a first wireless module, a second wireless module, and a controller module. The first wireless module is configured to perform wireless transmissions and receptions to and from a telecommunication network using a cellular technology. The second wireless module is configured to perform wireless transmissions and receptions using a WiFi technology. The controller module is configured to perform operations for communication controls, wherein the operations comprise searching for APs via the second wireless module, reporting a result of the search to the telecommunication network via the first wireless module, and connecting to one of the searched APs via the second wireless module according to a first instruction received from the telecommunication network via the first wireless module for switching data traffic from the telecommunication network to the one of the searched APs.

In another aspect of the invention, a telecommunication network is provided. The telecommunication network comprises an access network and a core network. The access network is configured to perform wireless transmissions and receptions to and from a mobile communication device. The core network is configured to perform operations for communication controls, wherein the operations comprise receiving a result of a search for APs utilizing a WiFi technology from the mobile communication device via the access network, transmitting a first instruction to the mobile communication device via the access network for requesting the mobile communication device to connect to one of the searched APs, and switching data traffic associated with the mobile communication device to the one of the searched APs after the mobile communication device has connected to the one of the searched APs.

In yet another aspect of the invention, a method for offloading data traffic associated with a mobile communication device from a telecommunication network to a WiFi AP is provided. The method comprises the steps of: searching, by the mobile communication device, for APs using a WiFi technology; reporting, by the mobile communication device, a result of the search to the telecommunication network using a cellular technology; transmitting, by the telecommunication network, a first instruction indicating one of the searched APs to the mobile communication device; connecting, by the mobile communication device, to the one of the searched APs; and switching, by the telecommunication network, data traffic associated with the mobile communication device to the one of the searched APs after the mobile communication device has connected to the one of the searched APs.

Other aspects and features of the present invention will become apparent to those with ordinarily skill in the art upon review of the following descriptions of specific embodiments of the mobile communication devices, the telecommunication networks, and the methods for offloading data traffic associated with a mobile communication device from a telecommunication network to a WiFi AP.

### BRIEF DESCRIPTION OF DRAWINGS

The invention can be more fully understood by reading the subsequent detailed description and examples with references made to the accompanying drawings, wherein:

Fig. 1 is a block diagram of a wireless communications environment according to an embodiment of the invention;

Fig. 2 is a block diagram illustrating the mobile communication device 110 according to an embodiment of the invention;

Fig. 3 is a flow chart illustrating the method for offloading data traffic associated with a mobile communication device from a telecommunication network to a WiFi AP according to an embodiment of the invention; and

Fig. 4 is a message sequence chart illustrating the offloading of data traffic associated with the mobile communication device 110 from the telecommunication network 120 to the AP 141 according to an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

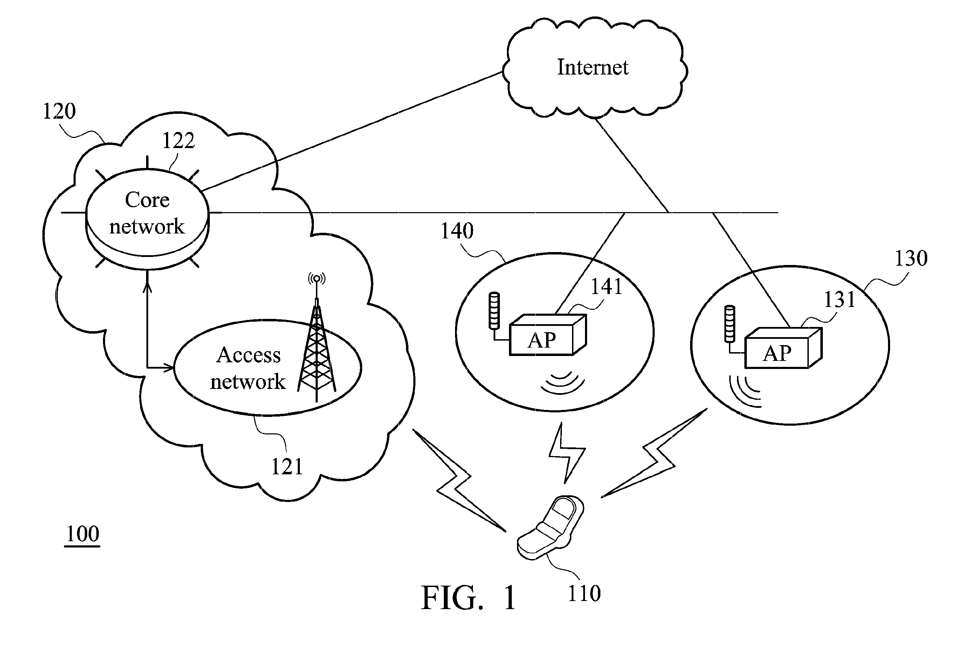

Fig. 1 is a block diagram of a wireless communications environment according to an embodiment of the invention. The wireless communications environment 100 comprises a mobile communication device 110, a telecommunication network 120 and WLANs 130 and 140. The mobile communication device 110 may be a smart phone, a panel Personal Computer (PC), a laptop computer, or any computing device supporting at least the WiFi technology and the cellular technology utilized by the telecommunication network 120. The mobile communication device 110 may selectively connect to one or both of the telecommunication network 120 and the WLAN 130 or 140 for obtaining wireless services. The telecommunication network 120 may be a GSM system, GPRS system, WCDMA system, CDMA-2000 system, TD-SCDMA system, WiMAX system, LTE system, or TD-LTE system, etc., depending on the cellular technology in use. The telecommunication network 120 comprises an access network 121 and a core network 122, wherein the access network 121 is controlled by the core network 122 to provide the functionality of wireless transceiving for the telecommunication network 120. For example, if the telecommunication network 120 is a WCDMA system, the access network 121 may be a Universal Terrestrial Radio Access Network (UTRAN) and the core network 122 may be a General Packet Radio Service (GPRS) core which includes a Home Location Register (HLR), at least one Serving GPRS Support Node (SGSN), and at least one Gateway GPRS Support Node (GGSN). Alternatively, if the telecommunication network 120 is an LTE or LTE-Advanced system, the access network 121 may be an Evolved-UTRAN (E-UTRAN) and the core network 122 may be an Evolved Packet Core (EPC) which includes a Home Subscriber Server (HSS), Mobility Management Entity (MME), Serving Gateway (S-GW), Authentication, Authorization, and Accounting (AAA) server, and Packet Data Network Gateway (PDN-GW or P-GW).

The WLANs 130 and 140 may be respectively established by APs 131 and 141 utilizing the WiFi technology, implemented as alternatives for providing wireless services for the mobile communication device 110. Specifically, the APs 131 and 141 may connect to a local area network by an Ethernet cable, wherein the local area network may connect to the Internet directly or via the core network 122. For example, if the telecommunication network 120 is an LTE or LTE-Advanced system, the APs 131 and 141 may connect to the PDN-GW/P-GW of the core network 122 and then connect to the Internet therethrough. The APs 131 and 141 typically receive, buffer, and transmit data between the WLANs 130 and 140 and the mobile communication device 110. In general, each of the APs 131 and 141 may have, on average, a coverage varying from 20 meters in an area with obstacles (walls, stairways, elevators etc) to 100 meters in an area with a clear line of sight. Alternatively, the APs 131 and 141 may utilize another wireless technology, such as the Bluetooth technology, the Zigbee technology, or others, and the invention is not limited thereto.

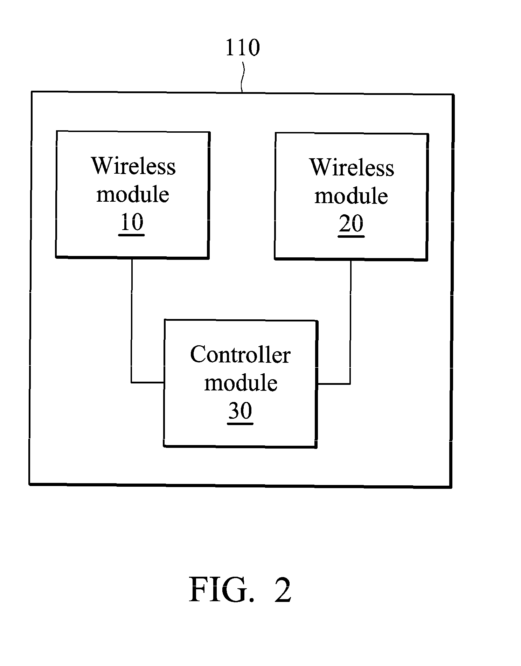

Fig. 2 is a block diagram illustrating the mobile communication device 110 according to an embodiment of the invention. The mobile communication device 110 comprises two wireless modules 10 and 20, and a controller module 30. The wireless module 10 is responsible for performing the functionality of wireless transmissions and receptions to and from the telecommunication network 120. The wireless module 20 is responsible for performing wireless transmissions and receptions to and from the WLAN 130 or 140. The controller module 30 is responsible for controlling the operations of the wireless modules 10 and 20, and other functional components, such as a display unit and/or keypad serving as the Man-Machine Interface (MMI), a storage unit storing the program codes of applications or communication protocols, a Global Positioning System (GPS) unit for obtaining location information, or others. Also, the controller module 30 controls the wireless modules 10 and 20 for performing the method for offloading data traffic in the present invention.

To further clarify, each of the wireless modules 10 and 20 may be a respective Radio Frequency (RF) unit, and the controller module 30 may be a general-purpose processor or a Micro Control Unit (MCU) of a baseband unit. The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 2.4GHz, 3.6GHz, 4.9GHz, or 5GHz utilized in WiFi technology, or 900MHz, 1900MHz, or 2100MHz utilized in WCDMA systems, or 900MHz, 2100MHz, or 2.6GHz utilized in LTE/LTE-Advanced systems, or others depending on the wireless technology in use.

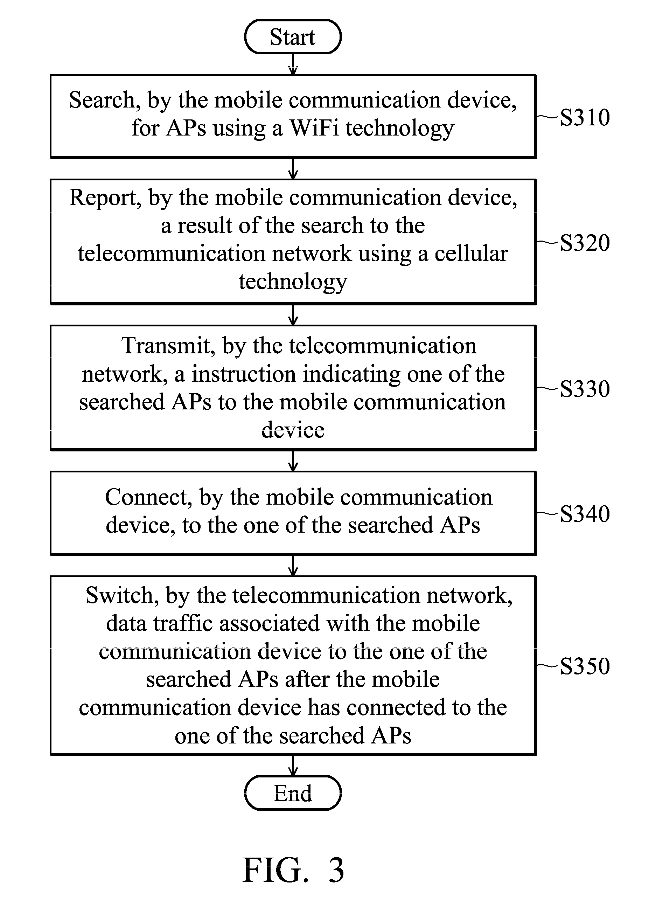

Fig. 3 is a flow chart illustrating the method for offloading data traffic associated with a mobile communication device from a telecommunication network to a WiFi AP according to an embodiment of the invention. The method may be applied in the Media Access Control (MAC) layer, the Radio Resource Control (RRC) layer, the Non-Access Stratum (NAS) layer, or the Application layer of the communication protocol in use between the mobile communication device and the telecommunication network. In this embodiment, the mobile communication device initially obtains the wireless services from the telecommunication network. To begin, the mobile communication device searches for APs using the WiFi technology (step S310). Specifically, the mobile communication device may scan the Industrial, Scientific and Medical (ISM) frequency bands used by the WiFi technology in search for available APs nearby. The ISM frequency bands may include 2.4GHz for 802.11b/g/n, 3.6GHz or 4.9GHz for 802.11y, and 5GHz for 802.11a/h/j/n/ac.

In one embodiment for the step S310, the mobile communication device may spontaneously initiate the search for APs when detecting that there is at least one available AP nearby according to its current location and locations of previously connected or predetermined APs. Specifically, the mobile communication device may turn on the GPS therein to obtain its current location.

In another embodiment for the step S310, the search for APs may be performed in response to receiving an instruction from the telecommunication network. In other words, it is the telecommunication network which initiates the mobile communication device to search for APs. For example, the telecommunication network may broadcast or transmit the instruction when detecting that the traffic loading of the serving cell associated with the mobile communication device is greater than a first predetermined threshold (i.e., the service cell is over loaded), or when detecting that the signal quality of the mobile communication device has dropped below a second predetermined threshold (i.e., poor signal quality of the mobile communication device). Furthermore, the instruction may indicate to the mobile communication device, the conditions for determining which of the searched APs should be included in the result of the search, wherein the conditions may comprise at least one of the following: the Service Set Identifiers (SSIDs) of the searched APs matching a predetermined pattern (e.g., the searched AP with SSID matches "CHT Wi-Fi" should be included in the result of the search), the Internet Protocol (IP) addresses of the searched APs are within a predetermined range, the signal qualities of the searched APs are greater than a first predetermined level, the signal quality of the current serving AP is less than a second predetermined level, and/or the signal qualities of the searched APs are greater than the signal quality of the current serving AP, etc.

In the case where the search for APs is initiated by the telecommunication network, the mobile communication device may report its WiFi capability, such as, the supported WiFi mode (e.g., 802.11 a/b/g/h/j/n/y/ac), and the MAC address used for WiFi access, etc., to the telecommunication network before the step S310.

Subsequently, when the search for APs is finished, the mobile communication device reports the result of the search to the telecommunication network using a cellular technology, such as the GSM/GPRS/EDGE technology, WCDMA technology, CDMA-2000 technology, TD-SCDMA technology, WiMAX technology, LTE/LTE-Advanced technology, TD-LTE technology, or others, which is utilized by the telecommunication network (step S320). Specifically, the result of the search may contain at least one of the following: the signal qualities of the searched APs, an indicator for the remaining power of the mobile communication device, the SSIDs of the searched APs, the IP addresses of the searched APs, the MAC addresses of the searched APs, the channel identifications used by the searched APs, the frequencies used by the searched APs, and the location information of the mobile communication device.

In response to receiving the report of the search result, the telecommunication network transmits an instruction indicating one of the searched APs to the mobile communication device (step S330). In one embodiment, the telecommunication network may determine the one of the searched APs according to at least one of the following: the signal qualities of the searched APs, the traffic loadings of the searched APs, the signal quality of the telecommunication network measured by the mobile communication device, and the traffic loading of the telecommunication network. For example, the telecommunication network may select the AP with good/fair signal quality and light traffic loading, and instruct the mobile communication device to connect to the selected AP.

When receiving the instruction, the mobile communication device connects to the one of the searched APs (step S340). Specifically, upon connecting to the one of the searched APs, the mobile communication device may need to perform the Authentication, Authorization, and Accounting (AAA) procedure to validate itself to the one of the searched APs before it can obtain wireless services therefrom. The AAA procedure may require some sort of security control. For example, the security control may be applied by using the Subscriber Identity Module (SIM) card, Universal SIM (USIM) card, or Removable User Identity Module (R-UIM) card, etc., associated with the cellular technology utilized by the mobile communication device, or by using a specific security password. In the case of security control with a security password, the telecommunication network may include the security password in the instruction in the step S330. In addition to the security password, the instruction in the step S330 may further contain the power saving parameter used by the one of the searched APs.

After the mobile communication device has connected to the one of the searched APs, the telecommunication network switches the data traffic associated with the mobile communication device to the one of the searched APs (step S350), and the method ends.

In another embodiment, the instruction in step S330 may indicate a plurality of the searched APs in an order, instead of only one of the searched APs, for the mobile communication device to try connecting to the plurality of the searched APs one by one according to the order, until connection to one of the plurality of the searched APs is successful or connection to all of the plurality of the searched APs fails. That is, if the connection to the first one of the plurality of the searched APs is not successful, the mobile communication device may proceed to connect to the next one of the plurality of the searched APs in the order, and so on.

Alternatively, before step S310 of the method, the mobile communication device may receive a user command for selecting an operation mode which indicates whether the mobile communication device or the telecommunication network has full control of the WiFi functionality of the mobile communication device, and report the operation mode to the telecommunication network. If the operation mode indicates that the telecommunication network has full control of the WiFi functionality (referred to herein as automatic mode), it means that the telecommunication network gets to control the turning on/off of the WiFi functionality, the searching for APs, the selection of the one of the searched APs for traffic offloading, and the configuring of the WiFi functionality to connect to the one of the searched APs, etc. Otherwise, if the operation mode indicates that the mobile communication device has full control of the WiFi functionality (referred to herein as manual mode), it means that the mobile communication device gets to control the aforementioned operations of the WiFi functionality. Note that, when the mobile communication device is in the manual mode, it does not need to report the result of the search to the telecommunication network and can determine which one of the searched APs to connect to by itself without the instruction from the telecommunication network. However, if mobile communication device is in the automatic mode (particularly if the WiFi functionality is manually turned on when the mobile communication device is in the automatic mode), the steps of the method in Fig. 3 may be performed due to that the user may wish the telecommunication network to assist the mobile communication device on determining an AP to connect to.

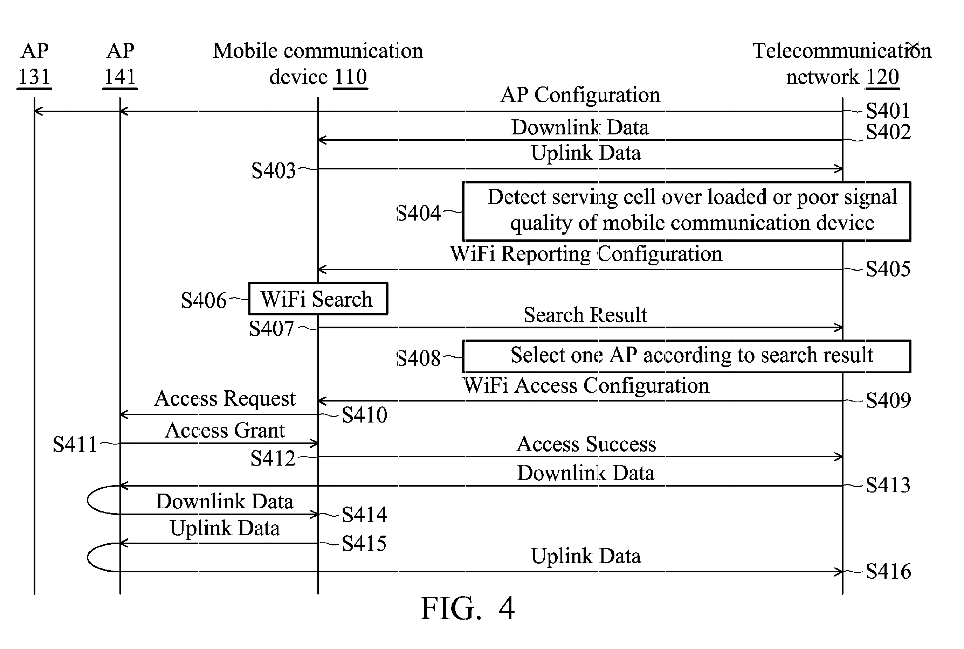

Fig. 4 is a message sequence chart illustrating the offloading of data traffic associated with the mobile communication device 110 from the telecommunication network 120 to the AP 141 according to an embodiment of the invention. In this embodiment, the APs 131 and 141 are deployed by the operator of the telecommunication network 120, so the telecommunication network 120 may transmit a respective AP Configuration to the APs 131 and 141 for configuring the APs 131 and 141 with specific SSIDs, IP addresses, channel identifications, and operating frequencies, etc (step S401). The mobile communication device 110 initially obtains wireless services from the telecommunication network 120, thereby receiving downlink data and transmitting uplink data from and to the telecommunication network 120 (steps S402∼S403).

Later, when the telecommunication network 120 detects that the serving cell associated with the mobile communication device 110 is over loaded or that the signal quality of the mobile communication device 110 is poor (step S404), it transmits a WiFi reporting configuration to the mobile communication device 110 for initiating a search for APs (step S405). Specifically, a broadcast or a dedicated instruction/message may be used to contain the WiFi reporting configuration, and the WiFi reporting configuration may indicate the conditions for determining which of the searched APs should be included in the result of the search. The detailed description of the conditions is the same as discussed above in Fig. 3, and is not repeated here for brevity.

Next, the mobile communication device 110 turns on the WiFi functionality, i.e., the wireless module 20, to search for APs according to the received WiFi reporting configuration (step S406), and then reports the result of the search to the telecommunication network 120 when finishing the search (step S407). The detailed description of the result of the search is the same as discussed above in Fig. 3, and is not repeated here for brevity. Based on the received result of the search, the telecommunication network 120 selects one AP, i.e., the AP 141, among the searched APs (step S408), and then transmits a WiFi access configuration of the selected AP to the mobile communication device 110 (step S409). The WiFi access configuration may indicate the selected AP and also comprise a security password and/or a power saving parameter corresponding to the selected AP.

In one embodiment, the mobile communication device 110 may start a timer for the searching for APs in step S406, and turn off the WiFi functionality, i.e., the wireless module 20, in response to no AP being searched upon expiry of the timer.

Subsequently, the mobile communication device 110 connects to the AP 141 according to the WiFi access configuration, by transmitting an Access Request to the AP 141 and receiving an Access Grant from the AP 141 (steps S410∼S411). In one embodiment for steps S410 and S411, the AP 141 is responsible for forwarding the Access Request to be processed by the AAA server in the core network 122 of the telecommunication network 120, and forwarding the Access Grant received from the AAA server to the mobile communication device 110. After successfully connecting to the AP 141, the mobile communication device 110 transmits a notification (denoted as "Access Success" in Fig. 4) to inform the telecommunication network 120 about the success of WiFi access to the AP 141 (step S412).

In one embodiment, the telecommunication network 120 may transmit a reconfiguration request to the mobile communication device 110 for releasing or reconfiguring the radio resources or connection between the mobile communication device 110 and the telecommunication network 120, in response to receiving the notification in step S412. For example, the Discontinuous Reception (DRX) parameters may be reconfigured for the mobile communication device 110 to sleep longer in the DRX cycles, so as to reduce battery consumption of the mobile communication device 110.

After that, the telecommunication network 120 starts to switch the data traffic associated with the mobile communication device 110 to the AP 141. Specifically, the downlink data is first transmitted from the telecommunication network 120 to the AP 141 (step S413), and then forwarded to the mobile communication device 110 (step S414). Likewise, the uplink data is first transmitted from the mobile communication device 110 to the AP 141 (step S415), and then forwarded to the telecommunication network 120 (step S416).

In another embodiment, after the mobile communication device 110 has successfully connected to the AP 141 and the data traffic associated with the mobile communication device 110 has been switched from the telecommunication network 120 to the AP 141, the mobile communication device 110 may start a timer in response to losing connection to the AP 141, and report the connection loss to the telecommunication network 120. The mobile communication device 110 may turn off the WiFi functionality, i.e., the wireless module 20, in response to the expiry of the timer. Alternatively, the telecommunication network 120 may transmit an instruction to turn off the WiFi functionality of the mobile communication device 110 in response to the reported connection loss.

In yet another embodiment, after the mobile communication device 110 has successfully connected to the AP 141 and the data traffic associated with the mobile communication device 110 has been switched from the telecommunication network 120 to the AP 141, the mobile communication device may perform a random access procedure and a connection establishment procedure for reconnecting to the telecommunication network 120 in response to losing connection to the AP 141. For the random access procedure, a large initial power or power increment step is used for a preamble transmission or a small back-off value is used. For the connection establishment procedure, an establishment cause is used to indicate a high priority access. Specifically, the establishment cause may be an existing or newly added data field in the RRC CONNECTION REQUEST message. Thus, the random access procedure or the connection establishment procedure may be completed as soon as possible to have the data traffic switched back to the telecommunication network, without resulting in a long service break of the data traffic in response to the connection loss to WiFi AP.

In addition to the result of the search for APs, the mobile communication device 110 may further report to the telecommunication network 120 with the traffic loading or data rate of the AP 141, the status concerning whether the WiFi functionality, i.e., the wireless module 20, is turned on or off, and/or available AP(s) which is detected according to the current location of the mobile communication device 110 and location information of the available AP(s) without being configured by the telecommunication network to search for APs.

Note that, the AP which the data traffic is offloaded to is determined by the telecommunication network according to the result of search performed by the mobile communication device. Thus, the invention advantageously may guarantee that a suitable AP is selected for data traffic offloading to improve the performance of wireless transceiving for mobile communication devices, and that the telecommunication network may have full control of which AP the mobile communication device should connect to, which is beneficial for operational concerns of telecom operators.

While the invention has been described by way of example and in terms of preferred embodiment, it is to be understood that the invention is not limited thereto. Those who are skilled in this technology can still make various alterations and modifications without departing from the scope and spirit of this invention.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

## Claims

1. A mobile communication device, comprising:
a first wireless module performing wireless transmissions and receptions to and
from a telecommunication network using a cellular technology;
a second wireless module performing wireless transmissions and receptions using a Wireless Fidelity (WiFi) technology; and
a controller module performing operations for communication controls, wherein
the operations comprise searching for Access Points (APs) via the second wireless module, reporting a result of the search to the telecommunication network via the first wireless module, and connecting to one of the searched APs via the second wireless module according to a first instruction received from the telecommunication network via the first wireless module for switching data traffic from the telecommunication network to the one of the searched APs.

2. The mobile communication device of claim 1, wherein the searching for APs is performed in response to detecting that there is at least one available AP nearby according to a current location of the mobile communication device and locations of previously connected or predetermined APs.

3. The mobile communication device of claim 1, wherein the searching for APs is performed in response to receiving a second instruction from the telecommunication network via the first wireless module.

4. The mobile communication device of claim 3, wherein the second instruction is broadcasted by the telecommunication network when detecting that a traffic loading of a serving cell associated with the mobile communication device is greater than a first predetermined threshold.

5. The mobile communication device of claim 3, wherein the second instruction is transmitted by the telecommunication network when detecting that a signal quality of the mobile communication device has dropped below a second predetermined threshold.

6. The mobile communication device of any of claims 3 to 5, wherein the second instruction indicates to the mobile communication device, the conditions for determining which of the searched APs should be included in the result of the search, and the conditions comprise at least one of the following:
Service Set Identifiers (SSIDs) of the searched APs matching a predetermined pattern;
Internet Protocol (IP) addresses of the searched APs are within a predetermined range;
signal qualities of the searched APs are greater than a first predetermined level;
a signal quality of a current serving AP is less than a second predetermined level; and
the signal qualities of the searched APs are greater than the signal quality of the current serving AP.

7. The mobile communication device of any of claims 1 to 6, wherein the first instruction indicates the one of the searched APs to the mobile communication device, and the telecommunication network determines the one of the searched APs according to at least one of the following:
signal qualities of the searched APs;
traffic loadings of the searched APs;
a signal quality of the telecommunication network, which is measured by the mobile communication device; and
a traffic loading of the telecommunication network.

8. The mobile communication device of any of claims 1 to 7, wherein the controller module further transmits a notification to the telecommunication network via the first wireless module, in response to success of the connecting to the one of the searched APs, and releases or reconfigures radio resources or a connection between the mobile communication device and the telecommunication network according to a reconfiguration request which is transmitted by the telecommunication network in response to receiving the notification.

9. The mobile communication device of any of claims 1 to 8, wherein the controller module further starts a timer in response to losing connection to the one of the searched APs, reports the connection loss to the telecommunication network via the first wireless module in response to failing to recover a connection to the one of the searched APs upon an expiry of the timer, and turns off the second wireless module in response to the expiry of the timer, or in response to receiving a third instruction from the telecommunication network via the first wireless module after reporting the connection loss.

10. The mobile communication device of any of claims 1 to 9, wherein the controller module further reports at least one of the following to the telecommunication network via the first wireless module:
a traffic loading or a data rate of the one of the searched APs; and
a status concerning whether the second wireless module is turned on or off.

11. The mobile communication device of any of claims 1 to 10, wherein the controller module further receives a user command for selecting an operation mode which indicates whether the controller module or the telecommunication network has full control of the second wireless module, and reports the operation mode to the telecommunication network via the first wireless module.

12. The mobile communication device of claim 11, wherein the searching for APs is performed in response to that the second wireless module is manually turned on when the operation mode indicates that the telecommunication network has the full control of the second wireless module.

13. The mobile communication device of any of claims 1 to 12, wherein, prior to the searching of APs, the controller module further reports an available AP to the telecommunication network via the first wireless module, in response to detecting that the available AP is nearby according to a current location of the mobile communication device and location information of the available AP.

14. A telecommunication network, comprising:
an access network performing wireless transmissions and receptions to and
from a mobile communication device; and
a core network performing operations for communication controls, wherein
the operations comprise receiving a result of a search for Access Points (APs) utilizing a Wireless Fidelity (WiFi) technology from the mobile communication device via the access network, transmitting a first instruction to the mobile communication device via the access network for requesting the mobile communication device to connect to one of the searched APs, and
switching data traffic associated with the mobile communication device to the one of the searched APs after the mobile communication device has connected to the one of the searched APs.

15. The telecommunication network of claim 14, wherein the search for APs is performed in response to the mobile communication device detecting that there is at least one available AP nearby according to a current location of the mobile communication device and locations of previously connected or predetermined APs.

16. The telecommunication network of claim 14 or 15, wherein the core network further transmits a second instruction to the mobile communication device via the access network for requesting the mobile communication device to perform the search for APs.

17. The telecommunication network of claim 16, wherein the second instruction is broadcasted when detecting that a traffic loading of a serving cell associated with the mobile communication device is greater than a first predetermined threshold.

18. The telecommunication network of claim 16, wherein the second instruction is transmitted when detecting that a signal quality of the mobile communication device has dropped below a second predetermined threshold.

19. The telecommunication network of any of claims 16 to 18, wherein the second instruction indicates to the mobile communication device, the conditions for determining which of the searched APs should be included in the result of the search for APs, and the conditions comprise at least one of the following:
Service Set Identifiers (SSIDs) of the searched APs matching a predetermined pattern;
Internet Protocol (IP) addresses of the searched APs are within a predetermined range;
signal qualities of the searched APs are greater than a first predetermined level;
a signal quality of a current serving AP is less than a second predetermined level; and
the signal qualities of the searched APs are greater than the signal quality of the current serving AP.

20. The telecommunication network of any of claims 14 to 19, wherein the first instruction indicates the one of the searched APs to the mobile communication device, and the core network determines the one of the searched APs according to at least one of the following:
signal qualities of the searched APs;
traffic loadings of the searched APs;
a signal quality of the telecommunication network, which is measured by the mobile communication device; and
a traffic loading of the telecommunication network.

21. The telecommunication network of any of claims 14 to 20, wherein the core network further receives at least one of the following from the mobile communication device via the access network:
a notification from the mobile communication device via the access network,
which indicates that the mobile communication device has successfully connected to the one of the searched APs;
a report of a connection loss to the one of the searched APs from the mobile communication device via the access network;
a traffic loading or a data rate of the one of the searched APs;
a status concerning whether WiFi functionality of the mobile communication device is turned on or off from; and
an operation mode selected by a user, which indicates whether the mobile communication device or the telecommunication network has full control of the WiFi functionality of the mobile communication device.

22. The telecommunication network of claim 21, wherein the core network further reconfigures the mobile communication device, via the access network, to release or reconfigure radio resources or a connection between the mobile communication device and the access network, in response to the notification.

23. The telecommunication network of claim 21, wherein the core network further requests the mobile communication device to turn off the WiFi functionality via the access network in response to the reported connection loss.

24. The telecommunication network of any of claims 21 to 23, wherein the search for APs is initiated by the core network via the access network, in response to that the WiFi functionality of the mobile communication device is manually turned on when the operation mode indicates that the telecommunication network has the full control of the WiFi functionality of the mobile communication device.

25. A method for offloading data traffic associated with a mobile communication device with a Wireless Fidelity (WiFi) functionality from a telecommunication network to an Access Point (AP), comprising:
searching, by the mobile communication device, for APs using a WiFi technology;
reporting, by the mobile communication device, a result of the search to the telecommunication network using a cellular technology;
transmitting, by the telecommunication network, a first instruction indicating one of the searched APs to the mobile communication device;
connecting, by the mobile communication device, to the one of the searched APs according to the first instruction; and
switching, by the telecommunication network, data traffic associated with the mobile communication device to the one of the searched APs after the mobile communication device has successfully connected to the one of the searched APs.

26. The method of claim 25, wherein the search for APs is performed in response to the mobile communication device detecting that there is at least one available AP nearby according to a current location of the mobile communication device and locations of previously connected or predetermined APs.

27. The method of claim 25 or 26, further comprising:
transmitting, by the telecommunication network, a second instruction to the mobile communication device for requesting the mobile communication device to perform the search for APs.

28. The method of claim 27, wherein the second instruction is broadcasted when detecting that a traffic loading of a serving cell associated with the mobile communication device is greater than a first predetermined threshold.

29. The method of claim 27, wherein the second instruction is transmitted when detecting that a signal quality of the mobile communication device has dropped below a second predetermined threshold.

30. The method of any of claims 27 to 29, wherein the second instruction indicates to the mobile communication device, conditions for determining which of the searched APs should be included in the result of the search, and the conditions comprise at least one of the following:
Service Set Identifiers (SSIDs) of the searched APs matching a predetermined pattern;
Internet Protocol (IP) addresses of the searched APs are within a predetermined range;
signal qualities of the searched APs are greater than a first predetermined level;
a signal quality of a current serving AP is less than a second predetermined level; and
the signal qualities of the searched APs are greater than the signal quality of the current serving AP.

31. The method of any of claims 25 to 30, wherein the first instruction indicates the one of the searched APs to the mobile communication device, and the telecommunication network determines the one of the searched APs according to at least one of the following:
signal qualities of the searched APs;
traffic loadings of the searched APs;
a signal quality of the telecommunication network, which is measured by the mobile communication device; and
a traffic loading of the telecommunication network.

32. The method of any of claims 25 to 31, further comprising:
transmitting, by the mobile communication device, a notification to the telecommunication network, in response to that it has successfully connected to the one of the searched APs; and
reconfiguring, by the telecommunication network, the mobile communication device to release or reconfigure radio resources or a connection between the mobile communication device and the telecommunication network, in response to receiving the notification.

33. The method of any of claims 25 to 32, further comprising:
starting, by the mobile communication device, a timer in response to losing connection to all of the searched APs after connecting to the one of the searched APs; and
reporting, by the mobile communication device, the connection loss to the telecommunication network in response to failing to recover a connection to the one of the searched APs upon an expiry of the timer.

34. The method of claim 33, further comprising:
turning off, by the mobile communication device, the WiFi functionality in response to the expiry of the timer, or in response to receiving a third instruction from the telecommunication network, which is transmitted in response to the reported connection loss.

35. The method of any of claims 25 to 34, further comprising:
reporting, by the mobile communication device, a traffic loading or a data rate of the one of the searched APs, or a status concerning whether the WiFi functionality is turned on or off, to the telecommunication network.

36. The method of any of claims 25 to 35, further comprising:
receiving, by the mobile communication device, a user command for selecting an operation mode which indicates whether the mobile communication device or the telecommunication network has full control of the WiFi functionality of the mobile communication device; and
reporting, by the mobile communication device, the operation mode to the telecommunication network.

37. The method of claim 36, wherein the searching for APs is performed in response to that the WiFi functionality of the mobile communication device is manually turned on when the operation mode indicates that the telecommunication network has the full control of the WiFi functionality of the mobile communication device.

38. The method of any of claims 25 to 37, further comprising:
reporting, by the mobile communication device, an available AP to the telecommunication network, in response to detecting that the available AP is nearby according to a current location of the mobile communication device and location information of the available AP, prior to the searching of APs.
